# EUROPÄISCHE PATENTSCHRIFT

(11) **EP 2 297 039 B1**
(45) Veröffentlichungstag und Bekanntmachung des Hinweises auf die Patenterteilung: **26.08.2015**
(21) Anmeldenummer: 09753687.4
(22) Anmeldetag: 29.05.2009
(51) Int. Cl.: C01G 3/00, C01G 37/02, C01G 37/027, C01G 37/14, B01J 37/03, B01J 37/08, B01J 23/00, B01J 23/86, C01G 37/00

(54) **VERFAHREN ZUR HERSTELLUNG KUPFER- UND CHROMHALTIGER MISCHOXIDE**
METHOD FOR THE PRODUCTION OF MIXED OXIDES CONTAINING COPPER AND CHROMIUM
PROCÉDÉ DE PRODUCTION D'OXYDES MIXTES À BASE DE CUIVRE ET DE CHROME

(30) Priorität: 30.05.2008 DE 102008026208
(43) Veröffentlichungstag der Anmeldung: 23.03.2011
(73) Patentinhaber: Süd-Chemie IP GmbH & Co. KG, 80333 München (DE)
(72) Erfinder: WÖLK, Hans-Jörg, 83022 Rosenheim (DE); HAGEMEYER, Alfred, 83043 Badd Aibling (DE); GROSSMANN, Frank, 81667 München (DE); GORP, van Klaas, 46446 Emmerich (DE)
(74) Vertreter: Clariant Produkte (Deutschland) GmbH
(86) Internationale Anmeldenummer: PCT/EP2009/003880
(87) Internationale Veröffentlichungsnummer: WO 2009/144032

(56) Entgegenhaltungen:
- WO-A-2008/028681
- DE-A1-102004 055 189
- DE-A1-102006 032 452
- US-A- 5 169 869

## Beschreibung

Die Erfindung betrifft ein Verfahren zur Herstellung eines nanokristallinen kupfer- und chromhaltigen Mischoxids in einem Pulsationsreaktor.

Kupferchromit ist im Stand der Technik als Katalysator zur Dehydrierung von Alkohol und für einfache Hydrierungsreaktionen, beispielsweise zur Reduktion von Nitroverbindungen oder zur Hydrierung von Carbonsäuren bekannt. Technisch interessant ist insbesondere die Hydrierung freier Fettsäuren zu Fettalkoholen (siehe Ullmanns Encyklopädie der technischen Chemie, III. Auflage, Band 11, Seiten 427 - 445), welche in Gegenwart von Kupferchromit-Katalysatoren durchgeführt werden kann.

Nach einem von Adkins erarbeiteten Verfahren (siehe u.a. J. Schulz et al. in: Zeitschrift für anorganische und allgemeine Chemie, Band 346 (1966), S. 66 - 75) werden gewöhnlich Kupferchromit-Katalysatoren über intermediär gebildetes Kupferammoniumhydroxychromat, das durch Kalzinierung, d.h. thermisch, in Kupferoxid und Kupferchromit zersetzt wird, gewonnen. Das intermediär gebildete Kupferammoniumhydroxychromat erhält man durch Niederschlagsbildung von Ammoniumchromat und Kupfer-II-Salzen. Das dabei gebildete Kupfer(II)oxid wird anschließend durch Säurebehandlung, z.B. mit Eisessig, herausgewaschen. Die Säurebehandlung wirkt sich jedoch nachteilig auf die katalytische Aktivität des Kupferchromits aus.

In der deutschen Offenlegungsschrift DE-OS 3706658 wird ein Verfahren zur Herstellung eines säurefesten Kupferchromit-Spinell-Katalysators für die direkte Festbetthydrierung von Fettsäuren beschrieben. Dazu wird Kupfer(II)chromit, über die Stufe von intermediär gebildetem Kupferammoniumhydroxychromat, in Gegenwart von kolloidalem Kieselgel in an sich bekannter Weise hergestellt, und bei Temperaturen um 750°C im Verlauf von wenigstens 12 Stunde geglüht. Der so erhaltene Kupfer(II)chromit-Spinell-Katalysator enthält als sogenannte Energiepromotoren Barium- und Mangansalze. Die hohe Glühtemperatur führt jedoch zur Bildung unerwünschter Nebenprodukte, wodurch die Aktivität eines so hergestellten Kupferchromit-Katalysators verringert ist.

Die WO 2008/028681 A2 beschreibt ein Verfahren zur Herstellung nanokristalliner gemischter Metalloxidpartikel mit Spinell-, Ilmenit- oder Perowskit-Struktur. Gemäß der WO 2008/028681 A2 wird zunächst bei einer Temperatur von >50 °C eine stöchiometrische Mischung aus mindestens zwei unterschiedlichen Ausgangsverbindungen hergestellt und diese mittels eines Trägerfluids in eine Reaktionskammer eingebracht, bevor die Ausgangsverbindung anschließend in einer Behandlungszone einem Puls unterworfen wird.

Die US 5 169 869 A betrifft ein Verfahren zur Umsetzung von Synthesegas zu n-Paraffinen oder höheren Alkoholen unter Verwendung eines nicht-stöchiometrischen Kopräzipitats aus einem Kupfer-II-Salz und Ammoniumchromat, welches nach Trocknen und Kalzinieren mit einer Alkalimetallverbindung, vorzugsweise einer Kaliumverbindung, imprägniert wird, so dass der gemischte Kupferchromoxid-Katalysator letztlich weniger als 1 Gew.-% des Alkalimetalls enthält.

Die DE 10 2004 055 189 A1 offenbart, dass Kupferchromit-Katalysatoren, welche einen Anteil an SiO₂ von 5 bis 15 Gew.-% enthalten, eine erhöhte Hydrieraktivität sowie Selektivität bei der Hydrierung von Ketonen aufweisen. Zusätzlich können die Katalysatoren noch Barium und Mangan als Promotoren enthalten.

Eine Verbesserung der Katalysatoraktivität von Kupferchromit-Katalysatoren durch Zusatz von Mangan und/oder Bariumsalzen in Mengen bis zu 10 Ges.-% ist ebenfalls aus den europäischen Patentschriften EP-PS 69 339, EP-PS 1 276 722 und EP-PS 0023 699 bekannt.

Trotz dieser technischen Weiterentwicklungen weisen Kupferchromit-Katalysatoren nach dem Stand der Technik leider immer noch eine zu geringe Aktivität auf.

Die Aufgabe der vorliegenden Erfindung bestand somit in der Bereitstellung eines Kupferchromit-Katalysators, der eine erhöhte Aktivität aufweist.

Die Aufgabe wird gelöst durch ein Verfahren zur Herstellung eines nanokristallinen kupfer- und chromhaltigen Mischoxids, umfassend die Schritte
a) des Einbringens einer Lösung, Suspension oder Aufschlämmung, enthaltend kupferhaltige und chromhaltige Ausgangsverbindungen oder eine kupfer- und chromhaltige Ausgangsverbindung, in eine Reaktionskammer mittels eines Trägerfluids,
b) einer thermischen Behandlung der kupferhaltigen und chromhaltigen Ausgangsverbindungen oder der kupfer- und chromhaltigen Ausgangsverbindung in einer Behandlungszone mittels einer pulsierenden Strömung bei einer Temperatur von 200 bis 700 °C,
c) des Bildens eines nanokristallinen kupfer- und chromhaltigen Mischoxids,
d) des Ausbringens des in Schritt b) und c) erhaltenen nanokristallinen kupfer- und chromhaltigen Mischoxids aus dem Reaktor.

Die kupferhaltigen und chromhaltigen Ausgangsverbindungen oder die kupfer- und chromhaltige Ausgangsverbindung sind ausgewählt aus der Gruppe umfassend komplexe Chromatverbindungen, Kupferamincarbonat, Chromsäuren und Kupferhydroxycarbonat. Bevorzugt ist die komplexe Chromatverbindung ein Kupferchromat.

Weiterhin ist bevorzugt, dass als zusätzliche Ausgangsverbindung noch eine bariumhaltige und/oder manganhaltige Ausgangsverbindung eingesetzt wird. Barium und Mangan sind als Promotoren bekannt. Bevorzugt ist die bariumhaltige Ausgangsverbindung ein Bariumchromat, besonders bevorzugt ein komplexes Bariumchromat und die manganhaltige Ausgangsverbindung ist bevorzugt ein Manganchromat, besonders bevorzugt ein komplexes Manganchromat.

So soll im Sinne der allgemeinen Beschreibung der Erfindung der Begriff "kupfer- und chromhaltig" in Bezug auf Mischoxide auch die weiteren bevorzugten Elemente, wie Barium und/oder Mangan mit umfassen, ohne dass es einer speziellen Erwähnung bedarf. Unter einem kupfer- und chromhaltigen Mischoxid im Sinne dieser Erfindung soll somit auch ein kupfer-, chrom-, barium- und/oder manganhaltiges Mischoxid verstanden werden.

Der Begriff "Mischoxid" \\ wird vorwiegend sowohl als homöotypes oder heterotypes Mischoxide gemäß der Definition von Mischkristallen in: Hollemann-Wiberg, Lehrbuch der Anorganischen Chemie, 102. Aufl., de Gruyter Berlin 2007, S. 130ff verstanden, d.h., dass die Metallionen Kristallgitterplätze besetzen oder als Mischphasen (s. vorliegende Literaturstelle S. 1404ff vorliegen). In weniger bevorzugten Ausgestaltungen liegt das Mischoxid auch als physikalische Mischung der Einzeloxide bzw. der einzelnen Mischoxide vor.

Überraschenderweise wurde gefunden, dass das Verfahren bei relativ niedrigen Temperaturen von 200 bis 700 °C, besonders bevorzugt von 230 bis 680 °C, besonders bevorzugt von 250 bis 650 °C durchgeführt werden kann. Bislang waren im Stand der Technik bevorzugte Temperaturen von mehr als 700 °C, und zwar bis zu 1400 °C bekannt. Ganz besonders überraschend wurde auch gefunden, dass durch das erfindungsgemäße Verfahren der Kristallisationsprozess des kupfer- und chromhaltigen Mischoxids gezielt gesteuert werden kann, insbesondere die Größe der Kristallite und die Porengrößenverteilung des entsprechenden kupfer- und chromhaltigen Mischoxids. Dies kann weiter durch die Verweilzeit in der Flamme bzw. durch die Reaktortemperatur weiter vorteilhaft beeinflusst werden. Durch die pulsierende thermische Behandlung werden die entstehenden kupfer- und chromhaltigen Mischoxidpartikel daran gehindert, zu agglomerieren. Typischerweise werden die nanokristallinen Partikel sofort durch den Strom an heißem Gas in eine kältere Zone überführt, wo die kupfer- und chromhaltigen Primärkristallite zum Teil mit Durchmessern von weniger als 150 nm, vorzugsweise 4 bis 150 nm, erhalten werden.

Dies führt bei den so erhältlichen kupfer- und chromhaltigen Mischoxidkristalliten zu deutlich erhöhten BET-Oberflächen von > 40 m²/g, bevorzugt > 150 m²/g, besonders bevorzugt > 200 m²/g und insbesondere bis zu 300 m²/g. Die Bestimmung der BET-Oberfläche erfolgt nach DIN 66132 (nach der Methode von Brunauer, Emmett und Teller). Die erhöhte BET-Oberfläche führt zu einer drastisch erhöhten katalytischen Aktivität des nanokristallinen kupfer- und chromhaltigen Mischoxids.

In dem erfindungsgemäßen Verfahren können Suspensionen ohne zusätzliche Filtrations- und/oder Trocknungsschritte bzw. ohne Zugabe von zusätzlichen Lösungsmitteln innerhalb eines sehr kurzen Zeitraumes, typischerweise innerhalb weniger Millisekunden, bei vergleichsweise niedrigeren Temperaturen als bei Verfahren des Standes der Technik üblich, kalziniert werden. Die entstehenden kupfer- und chromhaltigen Mischoxidkristallite weisen sehr hohe BET-Oberflächen auf. Damit ist ein kupfer- und chromhaltiger Mischoxidkatalysator mit erhöhter Reaktivität, verbessertem Umsatz und verbesserter Selektivität gegenüber den Katalysatoren des Standes der Technik zugänglich.

Durch die annähernd gleiche Verweilzeit jedes kupfer- und chromhaltigen Mischoxidpartikels in dem durch das Verfahren erzeugten homogenen Temperaturfeld entsteht ein äußerst homogenes Endprodukt mit enger monomodaler Teilchenverteilung. Eine Vorrichtung zur Durchführung des erfindungsgemäßen Verfahrens bei der Herstellung derartiger monomodaler nanokristalliner Metalloxidpulver ist beispielsweise aus der DE 101 09 892 A1 bekannt. Im Gegensatz zu der dort beschriebenen Vorrichtung und dem dort offenbarten Verfahren benötigt das vorliegende Verfahren jedoch keinen vorgelagerten Verdampfungsschritt, in dem der Ausgangsstoff, d.h. die Nickelaüsgangsverbindung, auf eine Verdampfungstemperatur erwärmt wird.

Die kupfer- und chromhaltige (und gegebenenfalls barium- und/oder manganhaltige) Ausgangsverbindung, aus der die kupfer- und chromhaltigen Mischoxidmaterialien hergestellt werden, werden direkt über ein Trägerfluid, insbesondere ein Trägergas, vorzugsweise ein inertes Trägergas, wie beispielsweise Stickstoff usw., in so genannte Reaktionskammern, d.h. in die Brennkammer, einge-führt. An die Reaktionskammer ist abgasseitig ein Resonanzrohr mit einem gegenüber der Reaktionskammer deutlich verringertem Strömungsquerschnitt angeschlossen. Der Brennkammerboden ist mit mehreren Ventilen zum Eintritt der Verbrennungsluft in die Brennkammer ausgestattet. Die aerodynamischen Ventile sind dabei strömungstechnisch und akustisch so mit der Brennkamme und der Resonanzrohrgeometrie abgestimmt, dass die in der Brennkammer erzeugten Druckwellen des homogenen "flämmenlosen" Temperaturfeldes sich vorwiegend im Resonanzrohr pulsierend ausgleiten. Es bildet sich ein so genannter Helmholtzresonator mit pulsierender Strömung aus mit einer Pulsationsfrequenz zwischen 3 und 150 Hz, bevorzugt 5 bis 50 Hz.

Die Materialzuführung in die Reaktionskammer erfolgt typischerweise entweder mit einem Injektor oder mit einer geeigneten Zweistoff- oder Dreistoffdüse oder in einem Schenkdosierer.

Bevorzugt werden die Ausgangsverbindungen in verdüster Form in die Reaktionskammer eingebracht, sodass eine feine Verteilung im Bereich der Behandlungszonen gewährleistet ist.

Die Ausgangsverbindungen können entweder gemeinsam oder getrennt in die Reaktionskammer eingebracht werden. Das Einbringen kann vorteilhaft über eine Zweistoff- oder eine Dreistoffdüse erfolgen, wobei die Ausgangsverbindungen entweder direkt versprüht werden und die Mischung somit in der Reaktionskammer entsteht oder indem zuerst eine Mischung hergestellt und diese dann versprüht wird.

Die kupfer- und chromhaltigen Ausgangsverbindungen (und gegebenenfalls die weiteren Ausgangsverbindungen) werden bevorzugt über ein nasschemisches Verfahren erhalten. Eine bevorzugte kupfer- und chromhaltige Ausgangsverbindung ist beispielsweise ein komplexes Kupfer-Barium-Ammonium-Chromat.

Die Herstellung des komplexen Kupfer-Barium-Ammonium-Chromats erfolgt beispielsweise indem eine Mischung aus Bariumnitrat und destilliertem Wasser zu einer Lösung verarbeitet wird, in die zusätzlich Kupfernitrattrihydrat zugegeben wird. Zu dieser Lösung gibt man dann eine Lösung von Ammoniumchromat in wässrigem Ammoniak. Die vorzugsweise warme Lösung der Nitrate wird gerührt, während die Ammoniumchromatlösung zugegeben wird. Das Verrühren wird fortgesetzt, wobei sich ein rötlich brauner Niederschlag aus Kupfer-Barium-Ammoniumchromat bildet.

Die Reaktion kann auch ohne Zusatz von Barium erfolgen. Jedoch ist bekannt, dass Barium als Katalysatorkomponente eine Schutzwirkung gegenüber einer Sulfatvergiftung aufweist und darüber hinaus einen stabilisierenden Effekt auf den Katalysator gegenüber Reduktion ausübt. Ebenso kann auch Mangan als Promotor und Stabilisator eingesetzt werden oder Barium und Mangan in Kombination.

Dieser nach dem oben beschriebenen Verfahren gebildete Kupfer-(Barium und/oder Mangan)Ammoniumchromat-Niederschlag wird, vorzugsweise nach einer Reinigung, einer thermischen Behandlung im Pulsationsreaktor unterzogen. Es kann auch eine Aufgabe auf den Pulsationsreaktor ohne vorherige Reinigung erfolgen.

Nach der thermischen Behandlung werden die entstandenen nanokristallinen kupfer- und chromhaltigen Mischoxide (mit oder ohne Barium und/oder Mangan), wenn möglich mittels des Trägerfluids, sofort in eine kältere Zone der Reaktionskammer überführt, sodass sie in der kälteren Zone abgeschieden werden und ausgetragen werden können. Die Ausbeute des erfindungsgemäßen Verfahrens beträgt nahezu 100%, da das entstehende Produkt vollständig aus dem Reaktor ausgetragen werden kann.

Typischerweise wird das Verfahren bei einem Druck im Bereich von Normaldruck bis 40 bar durchgeführt.

Es wurde gefunden, dass das so erhältliche nanokristalline kupfer- und chromhaltige Mischoxidmaterial bevorzugt eine Kristallitgröße im Bereich von 4 nm bis 150 nm, bevorzugt von 10 nm bis 120 nm, ganz besonders bevorzugt 10 bis 100 nm aufweist, was, wie vorstehend schon ausgeführt, durch die Pulsation der thermischen Behandlung bevorzugt eingestellt werden kann. Die Bestimmung der Teilchengröße kann durch XRD und/oder TEM erfolgen.

Die durch das erfindungsgemäße Verfahren erhaltenen kupfer- und chromhaltige Mischoxidteilchen weisen eine BET-Oberfläche von vorzugsweise > 40 m²/g, besonders bevorzugt > 100 m²/g, besonders bevorzugt > 150 m²/g und insbesondere bis zu 300 m²/g auf.

Bevorzugt enthält das kupfer- und chromhaltige Mischoxid weiter ein Barium- und/oder Mangan, bevorzugt Bariumchromat und/oder Manganchromat in Form eines Mischkristalls, einer Mischphase oder in weniger bevorzugter Ausführungsform als physikalische Mischung.

Das kupfer- und chromhaltige Mischoxidmaterial, vorzugsweise Kupferchromit, eignet sich in hervorragender Weise zur Verwendung als Katalysator oder als Katalysatorvorstüfe, insbesondere als Katalysator zur Dehydrierung von Alkoholen, für Hydrierungsreaktionen, zur Reduktion von Nitroverbindungen, zur Hydrierung von Carbonsäuren und für die Hydrierung freier Fettsäuren oder Fettsäureestern zu Fettalkoholen.

Der Katalysator kann als Beschichtungskatalysator oder als Vollkatalysator ausgebildet sein, also in Form eines Schüttgutkatalysators, Schalenkatalysators oder als Extrudat vorliegen. Allgemein können Katalysatoren in Vollkatalysatoren und Beschichtungskatalysatoren eingeteilt werden. Während Vollkatalysatoren zu über 50% aus einem katalytisch aktiven Material bestehen, bestehen Beschichtungskatalysatoren aus einem Katalysatorträgerkörper, wobei die Oberfläche des Katalysatorträgerkörpers mit einer Beschichtung versehen ist. Die Beschichtung wird meist mittels einer sog. Washcoat-Suspension, d.h. einer Aufschlämmung in einem fluiden Medium auf den Katalysatorträger aufgetragen. Gewöhnlich wird anschließend die aufgetragene Washcoat-Suspension getrocknet und kalziniert. Die Beschichtung kann anschließend mit einer weiteren katalytisch aktiven Komponente imprägniert werden, wobei die aktiven Komponenten auch in der Washcoat-Suspension gelöst sein können oder zuvor auf den Metalloxidpartikeln aufgebracht worden sein. Der Vorteil von Beschichtungskatalysatoren besteht in der einfachen Herstellung, die mit einem geringen verfahrenstechnischen Aufwand verbunden ist.

Bei der Herstellung von Extrudaten wird bevorzugt ein Bindemittel zugegeben. Als Bindemittel zur Herstellung von Extrudaten können beispielsweise peptisierte Aluminiumoxid-Hydrate verwendet werden. Zu diesen zählt beispielsweise Boehmit, der unter der Handelsbezeichnung "Pural SCF" (Hersteller SASOL) erhältlich ist. Diese Verbindungen unterstützen hervorragend die Formgebung. Dies basiert auf ihrer Fähigkeit, in Gegenwart von einwertigen Säuren zu peptisieren.

Die Extrudate können beliebige geometrische Formen besitzen, beispielsweise Stangen, Hohlzylinder, Monolithe und dergleichen.

Der Katalysator kann auch in Form von Pulver eingesetzt werden.

Die Erfindung soll nun anhand der nachstehenden und nicht als einschränkend zu verstehenden Ausführungsbeispiele näher erläutert werden. Die verwendete Vorrichtung entspricht dabei wie vorstehend schon erwähnt weitgehend der in der DE 101 09 892 A1 beschrieben Vorrichtung, mit dem Unterschied, dass die zur Durchführung des erfindungsgemäßen Verfahrens verwendete Vorrichtung keine Verdampfervorstufe aufwies.

### Ausführungsbeispiele

### Beispiel 1:

Eine Mischung aus 26,0 g (0,1 Mol) Bariumnitrat und 800 ml destilliertem Wasser wird auf 70 °C erwärmt. Nachdem eine vollständige Lösung eingetreten ist, wird 218 g (0,9 Mol) Kupfernitrattrihydrat zugegeben und die Mischung bei 70 °C gerührt bis eine klare Lösung eintritt.

Eine Lösung von Ammoniumchromat wird durch Auflösen von 126 g (0,5 Mol) Ammoniumdichromat in 600 ml destillierten Wasser hergestellt und dazu 150 ml 28 %-iges wässriger Ammoniak zugegeben. Die warme Lösung der Nitrate wird gerührt, während die Ammoniumchromatlösung in einem dünnen Strahl zugegeben wird. Das Verrühren wird für wenige Minuten fortgesetzt, wobei sich ein rötlich brauner Niederschlag aus Kupfer, Barium, Ammoniumchromat bildet, welcher über einen 16-cm Büchnertrichter abfiltriert und bei 110 °C getrocknet wird.

Die hergestellte Kupferchromatverbindung wird in destilliertem Wasser zu einer Suspension umgesetzt. Die Suspension wird über eine Zweistoffdüse in die thermische Anlage mit einer Aufgabemenge von 14 kg/Std. eingesprüht.

Bei unterschiedlichen Temperaturen wurden folgende BET-Oberflächen erhalten:
300 °C: 47 m²/g
350 °C: 56 m²/g
400 °C: 72 m²/g
450 °C: 80 m²/g

In diesem Beispiel wurde Barium verwendet, da es als Katalysatorkomponente eine Schutzwirkung gegenüber Sulfatvergiftung aufweist und darüber hinaus einen stabilisierenden Effekt auf den Katalysator gegenüber Reduktion ausübt.

### Beispiel 2:

Dieses Beispiel erfolgt analog zu Beispiel 1, jedoch wurde es ohne Verwendung von Barium durchgeführt. Das Bariumnitrat wurde also weggelassen und stattdessen 242 g (1 Mol Kupfernitrat) zugegeben. Alle anderen Details entsprechen dem Beispiel 1.

Die hergestellte Kupferchromatverbindung wird mit destilliertem Wasser zu einer Suspension umgesetzt. Die Suspension wird über eine Zweistoffdüse in die thermische Anlage mit einer Aufgabemenge von 14 kg/Std. eingesprüht.

Die erhaltenen BET-Oberflächen lagen im gleichen Bereich wie im Beispiel 1.

### Beispiel 3:

Beispiel 3 erfolgte analog zu Beispiel 1, jedoch wurden die Lösungen ohne vorheriges Mischen mit Hilfe einer Dreistoffdüse versprüht.

Die erhaltenen BET-Oberflächen vergleichbar mit denen aus Beispiel 1.

### Beispiel 4:

Beispiel 4 erfolgte analog zu Beispiel 1, jedoch wurde anstelle von Bariumnitrat 0,1 Mol Mangannitrat eingesetzt.

Die erhaltenen BET-Oberflächen vergleichbar mit denen aus Beispiel 1.

### Beispiel 5:

Beispiel 5 erfolgte analog zu Beispiel 1 jedoch wurde eine Mischung aus 0,05 Mol Bariumnitrat und 0,05 Mol Mangannitrat verwendet.

Die erhaltenen BET-Oberflächen vergleichbar mit denen aus Beispiel 1.

## Patentansprüche

1. Verfahren zur Herstellung von nanokristallinen kupfer- und chromhaltigen Oxiden, umfassend die Schritte
a) des Einbringens einer Lösung, Suspension oder Aufschlämmung, enthaltend kupferhaltige und chromhaltige Ausgangsverbindungen oder eine kupfer- und chromhaltige Ausgangsverbindung, in eine Reaktionskammer mittels eines Trägerfluids,
b) einer thermischen Behandlung der kupferhaltigen und chromhaltigen Ausgangsverbindungen oder der kupfer- und chromhaltigen Ausgangsverbindung in einer Behandlungszone mittels einer pulsierenden Strömung bei einer Temperatur von 200 bis 700 °C,
c) des Bildens eines nanokristallinen kupfer- und chromhaltigen Mischoxids,
d) des Ausbringens des in Schritt b) und c) erhaltenen nanokristallinen kupfer- und chromhaltigen Mischoxids aus dem Reaktor, dadurch gekenntzeichnet, das die kupferhaltigen und chromhaltige Ausgangsverbindungen oder die kupfer- und chromhaltige Ausgangsverbindung ausgewählt sind aus einer Gruppe umfassend komplexe Chromatverbindungen, Kupferamincarbonat, Chromsäure und Kupferhydroxycarbonat.

2. Verfahren nach Anspruch 1, **dadurch gekennzeichnet, dass** die komplexe Chromatverbindung ein Kupferchromat ist.

3. Verfahren nach einem der Ansprüche 1 oder 2, **dadurch gekennzeichnet, dass** zusätzlich noch eine bariumhaltige und/oder manganhaltige Ausgangsverbindung eingesetzt wird.

4. Verfahren nach Anspruch 3, **dadurch gekennzeichnet**, das die bariumhaltige Ausgangsverbindung ein komplexes Bariumchromat ist.

5. Verfahren nach Anspruch 4, **dadurch gekennzeichnet, dass** die manganhaltige Ausgangsverbindung ein komplexes Manganchromat ist.

## Claims

1. Process for preparing nanocrystalline copper- and chromium-containing oxides, which comprises the steps
a) introduction of a solution, suspension or slurry containing copper-containing and chromium-containing starting compounds or a copper- and chromium-containing starting compound into a reaction chamber by means of a carrier fluid,
b) thermal treatment of the copper-containing and chromium-containing starting compounds or the copper- and chromium-containing starting compound in a treatment zone by means of a pulsating flow at a temperature of from 200 to 700°C,
c) formation of a nanocrystalline copper- and chromium-containing mixed oxide,
d) discharge of the nanocrystalline copper- and chromium-containing mixed oxide obtained in step b) and c) from the reactor, **characterized in that** the copper-containing and chromium-containing starting compounds or the copper- and chromium-containing starting compound are selected from the group consisting of complex chromate compounds, cuprammine carbonate, chromic acid and copper hydroxycarbonate.

2. Process according to Claim 1, **characterized in that** the complex chromate compound is a copper chromate.

3. Process according to either Claim 1 or 2, **characterized in that** a barium-containing and/or manganese-containing starting compound is additionally used.

4. Process according to Claim 3, **characterized in that** the barium-containing starting compound is a complex barium chromate.

5. Process according to Claim 4, **characterized in that** the manganese-containing starting compound is a complex manganese chromate.

## Revendications

1. Procédé pour la préparation d'oxydes nanocristallins contenant du cuivre et du chrome, comprenant les étapes consistant à
a) introduire une solution, une suspension ou une suspension épaisse, contenant des composés de départ contenant du cuivre et du chrome, ou un composé de départ contenant du cuivre et du chrome dans une chambre de réaction au moyen d'un fluide support,
b) traiter thermiquement les composés de départ contenant du cuivre et du chrome ou le composé de départ contenant du cuivre et du chrome dans une zone de traitement au moyen d'un flux pulsé à une température de 200 à 700°C.
c) former un oxyde mixte nanocristallin contenant du cuivre et du chrome,
d) sortir l'oxyde mixte nanocristallin contenant du cuivre et du chrome obtenu dans l'étape b) et c) du réacteur, **caractérisé**
**en ce que** les composés de départ contenant du cuivre et du chrome ou le composé de départ contenant du cuivre et du chrome sont choisis dans un groupe comprenant des composés complexes de chromate, de l'amine-carbonate de cuivre, de l'acide chromique et de l'hydroxycarbonate de cuivre.

2. Procédé selon la revendication 1, **caractérisé en ce que** le composé complexe de chromate est un chromate de cuivre.

3. Procédé selon l'une quelconque des revendications 1 ou 2, **caractérisé en ce qu'**on utilise en plus encore un composé de départ contenant du baryum et/ou du manganèse.

4. Procédé selon la revendication 3, **caractérisé en ce que** le composé de départ contenant du baryum est un chromate complexe de baryum.

5. Procédé selon la revendication 4, **caractérisé en ce que** le composé de départ contenant du manganèse et un chromate complexe de manganèse.
